# EUROPEAN PATENT APPLICATION

(11) **EP 1 086 887 A2**
(43) Date of publication of application: **28.03.2001**
(21) Application number: 00203329.8
(22) Date of filing: 25.09.2000
(51) Int. Cl.: B62J 19/00, B62H 3/00

(54) **Parking shelter for scooters and motorcycles**

(30) Priority: 27.09.1999 IT MI990589 U
(71) Applicant: Russi, Michele, 20024 Garbagnate Milanese, Milano (IT)
(72) Inventor: Russi, Michele, 20024 Garbagnate Milanese, Milano (IT)
(74) Representative: Riccardi, Sergio

(57) **Abstract**

A parking shelter for scooters and two-wheeled vehicles of any kind is disclosed, comprising mechanical support means (2) fixed to the ground of the parking area, said support means (2) being operatively associated to covering means (7) with variable configuration, so as to cover and enclose completely said scooter (9) or vehicle when parked inside the shelter.

## Description

The present invention relates to a parking shelter for scooters and motorcycles of any kind.

The owners of any type of moped, scooters and motorcycles in general, often have the problem to park in a secure and protected way their two-wheeled vehicle, when a reserved but unattended outdoor area is available.

This is the case of the parking lots of many apartment houses and non residential structures such as offices, schools, universities, hospitals, public buildings, corporate headquarters and so forth.

Devices to block and support the front wheel, fixed to the ground are known. These devices generally comprise a couple of bars each forming a triangle with rounded corners. Antitheft devices to be used together with said blocking devices are also known and generally consist of steel chains of various types and sizes.

Nowadays modern electronic devices blocking the electric equipment of the motorcycle are also available for antitheft purposes.

The systems and devices now available on the market to protect and secure scooters and motorcycles in parking lots of this kind solve only partially the problem as they have the following drawbacks.

Use of these devices jointly or severally does not allow at all to protect the scooter or motorcycles when parked from atmospheric agents, so that rain, snow, dust, mud may wet or foul the vehicle according to circumstances.

Moreover the known blocking and/or antitheft devices are often ineffective because it is easy to reach and deactivate them and said devices do not protect the two-wheeled vehicle from marks caused by other vehicles or vandalic acts such as scratches, dents, breaking of lights, removal of the make emblem and so forth.

The object of the present invention is to remove the above mentioned drawbacks of the prior art devices.

Thus object of the present invention is to provide a parking shelter for scooters and motorcycles of any kind giving an efficient protection, easy to be used and to be manufactured by a mass production with the normal materials available on the market, so as to attain a rather low cost for the final user.

The parking shelter for scooters and motorcycles according to the invention comprises mechanical support means fixed to the ground of the parking area, said support means being operatively associated with covering means having a variable configuration to cover and enclose totally the parked scooter or motorcycle.

The parking shelter for scooters and motorcycles according to the present invention is characterized by the features recited in Claim 1.

The opening and closing operations of said shelter are carried out easily and efficiently as said mechanical support means comprise a plate or U-shaped profile and said covering means comprise a cap divided into a plurality of fan-like nested sections, one end of said cap being adapted to be fixed to one end of said plate or profile by mechanical means acting on a plurality of fixing points, while its side edges are fixed to an articulation guide also fixed to said plate or profile.

The parking shelter is reliable and secure as said plate or profile at the opposite end is provided with a mechanical, magnetic or electronic lock that may also be actuated by remote control, operatively associated with the edge of the last section of the spread cap in order to lock it in the closed position.

In addition or alternatively to said end lock, the reliability and security of the shelter can be obtained by providing also the above mentioned articulation guide with a mechanical, magnetic or electronic lock that may be also be actuated by a remote control, so as to block the articulated spreading or nesting motion of the cap sections around the articulation guide.

The parking shelter of the invention protects the scooter or motorcycle parked inside from impacts, vandalic acts and atmospheric agents as said covering means are made of rigid and waterproof materials.

The parking shelter according to the invention may also be used efficiently in paying parks or similar occurrences, because one or more rows of said shelters may be fixed to the ground by a tubular frame or rack connected with said mechanical support means or said articulation guide of each shelter.

Further features, advantages and details of the parking shelter for scooters or motorcycles according to the present invention will be more apparent when reading the following description, made with reference to the accompanying drawings, in which a preferred embodiment is shown as an illustrative but non-limiting example of the invention.

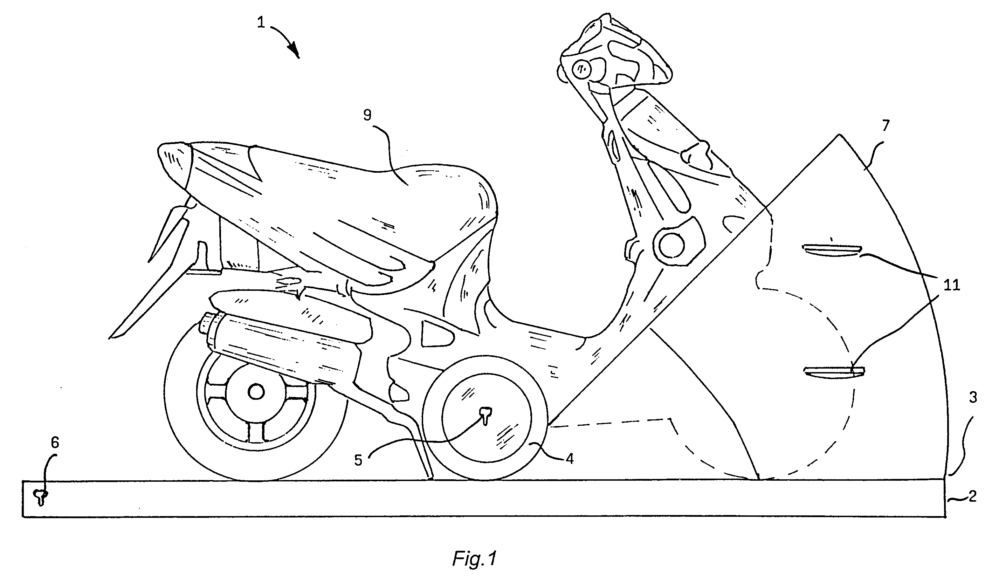

Fig. 1 is a side view of the parking shelter for scooters or motorcycles of the invention, when taken by a motorcycle.

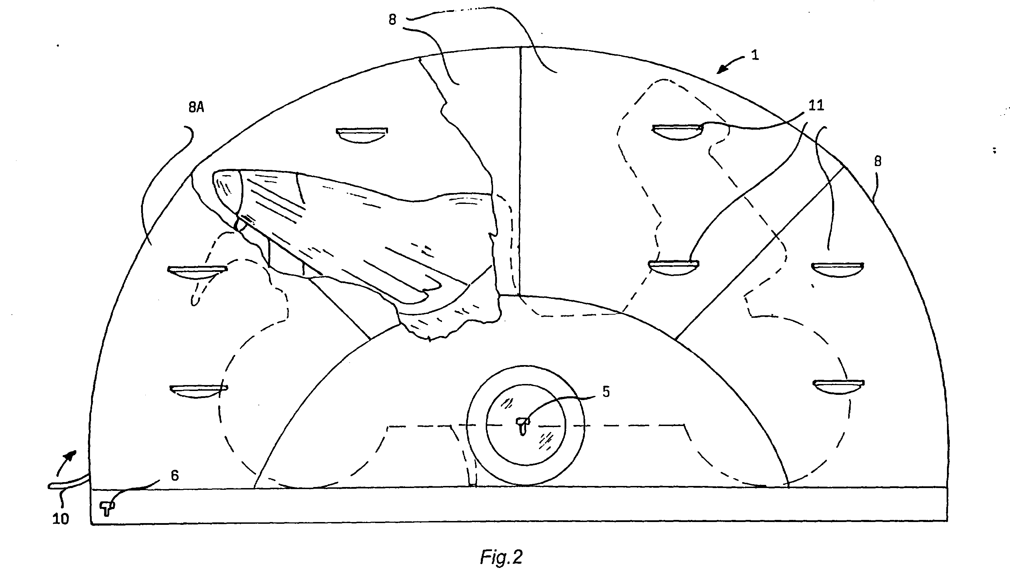

Fig. 2 is a partially sectioned side view of the shelter of Fig. 1 in the locked condition.

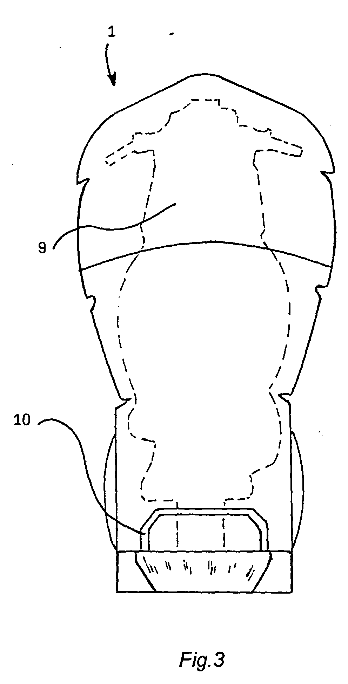

Fig. 3 is a rear view of the shelter in the condition of Fig. 2.
Fig. 4 is a perspective view of another embodiment of the cap element of the shelter.
Fig. 5 is a top view of the profile to be used with the cap element of Fig. 4.
Fig. 6 is a perspective view showing an example of a plurality of shelters arranged in a row.

With reference now to the drawings, the parking shelter 1 for scooters or motorcycles according to the invention comprises a support plate or bed 2, generally of a rectangular shape and fixed to the ground, which may also be provided with an entrance chute (not shown) to make easier the arrangement of the scooter or motorcycle 9 on the plate or bed 2.

Alternatively a generally U-shaped profile 20 directly fixed to the ground is used instead of the plate 2, in order to support at least one section (the first) of said shelter 1, as explained below.

More particularly, said plate 2 or profile 20 is connected at one end by a plurality of fixing points 3 and conventional fastening means to a covering means with variable configuration, preferably consisting of a cap 7 of rigid and waterproof material, divided into a plurality of fan-like nested sections 8. Said cap 7 may be made of the known shock resistant plastic materials or alternatively light metals and alloys.

Said cap 7 is preferably provided with a plurality of air vents or openings 11 on its outer surface, so as to allow dispersion of the residual heat of the vehicle engine when turned off and to offer less resistance to wind.

The cap 7 is also connected by a couple of circular articulation guides 4 to the central zone of the plate 2 or profile 20 so as to allow a regular rotary motion of the sections 8. One of the circular guides 4 is preferably provided with a lock 5 of known mechanical, magnetic or electronic type, that may be actuated by a remote control, so as to allow or block the rotary motion of the sections 8 of cap 7.

The other end of plate 2 or profile 20, opposite to the end with the fixing points 3, is contacted by the last or terminal section 8A of cap 7, having an edge contacting the plate 2 or profile 20, said section 8A having a lifting handle 10 for the manual operation of moving the cap 7.

Said section 8A once lowered in contact with plate 2 or profile 20, may then be blocked by another lock 6 similar to lock 5 and preferably arranged on plate 2 or profile 20.

Electric devices may also be optionally provided for rotating the sections 8 of cap 7 as well as antitheft systems connected with the locks 5,6, to plate 2 or profile 20, in order to improve comfort and security of the parking shelter 1 of the invention.

It is also possible to make a row of shelters 1 of the invention arranged side by side, which would result particularly useful in parking lots of apartment houses, pay parks and many other places.

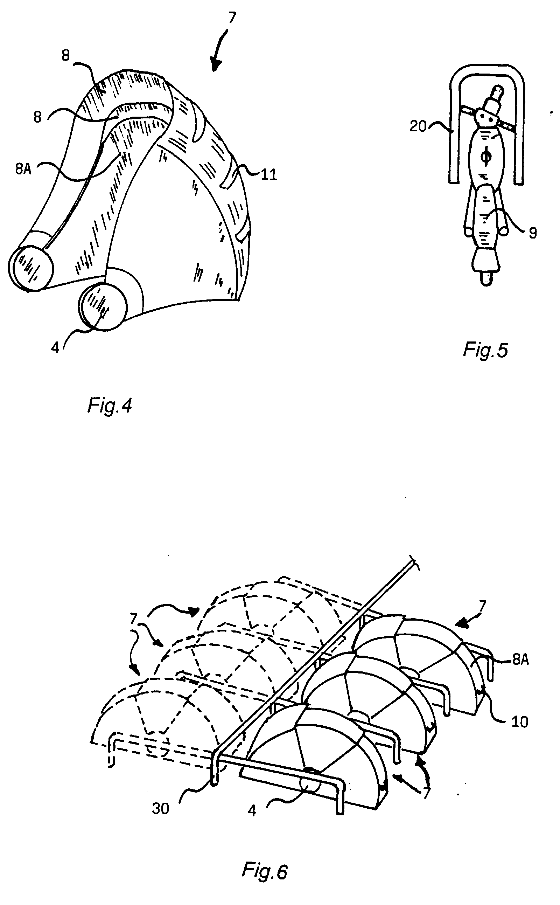

More particularly a tubular frame 30 like a rack is placed and fixed on the ground, and a plurality of shelters 1 are fixed to the frame parallel to one another, through the plates 2 or profiles 20 or most preferably through the articulation guides 4 as shown in Fig. 6.

The frame 30 may have any desired configuration, such as one row of parallel parking places, two opposite rows, a radial arrangement or any other form dictated by needs and space available.

The operation of the parking shelter for scooters and motorcycles of the invention may be easily understood from the foregoing description.

Once the scooter or motorcycle 9 is placed on the plate 2 or inside the surface defined by the profile 20 or perimeter of the shelter 1 when closed, blocking the vehicle by its stand, the cap 7 is spread or lowered manually through the handle 10 or by the mentioned optional means, the sides of the sections 8 running and rotating on the articulation guide 4.

Once the cap 7 totally covered the scooter 9, the free end of the last section 8A being in contact with the plate 2 or the ends of the U-shaped profile 20, the locks 5 or 6 or both if mounted together, are closed so as to prevent opening of cap 7.

The closing operation may be completed by turning on the optional alarm systems, while the opening of the shelter 1 of course consists in carrying out the above described steps in the reverse order.

The electric energy feeding the alarm systems, the cap motion devices and/or the locks 5,6 will be preferably obtained by connecting a feeding cable to the battery of the vehicle 9, once it is parked inside the shelter 1, or alternatively by the network current.

The two-wheeled vehicle 9 is thus protected from other vehicles present in the parking area, atmospheric agents, thefts and vandalic acts.

When the parking shelter 1 is used in public parking lots, it will obviously be possible to install on it all the conventional payment systems by coins, tokens, banknotes, credit cards, prepaid cards and the like, in order to actuate the locks.

Finally it is to be pointed out that the parking shelter of the invention might be used in any of its embodiments, to enclose a car or motor vehicle in general, of course by changing properly its size.

It is also clear that many modifications, adaptations, additions, variations and substitutions may be resorted to the foregoing embodiments described as illustrative and non-limiting examples, without departing however from the scope of the invention as defined in the appended claims.

## Claims

1. Parking shelter for scooters and motorcycles comprising mechanical support means fixed to the ground of the parking area, characterized in that covering means with variable configuration are operatively associated to said support means, so as to cover and enclose totally the parked scooter or motorcycle.

2. Parking shelter for scooters and motorcycles according to Claim 1, characterized in that said mechanical support means comprise an U-shaped profile (20) or a plate (2) generally provided with an entrance chute.

3. Parking shelter for scooters and motorcycles according to Claim 2, characterized in that said covering means comprise a cap (7) divided into a plurality of fan-like nested sections (8), one end of said cap (7) being fixed at one end of the plate (2) or profile (20) by mechanical fastening means acting on a plurality of fixing points (3), while the sides of said cap (7) are fixed to an articulation guide (4) also fixed to plate (2) or profile (20).

4. Parking shelter for scooters and motorcycles according to Claims 3, characterized in that said cap (7) is provided with a plurality of air vents or openings (11).

5. Parking shelter for scooters and motorcycles according to Claim 3, characterized in that the plate (2) or profile (20) at the other end opposite to said fixing points (3) is contacted by the edge of the last section (8A) of the cap (7), said last section (8A) being provided with an edge contacting the plate (2) or profile (20) and a lifting handle (10).

6. Parking shelter for scooters and motorcycles according to Claim 3, characterized in that said plate (2) or profile (20) at the end opposite to said fixing points (3) are provided with a mechanical, magnetic or electronic lock (6) that may be actuated by remote control, operatively associated to block the motion of cap (7).

7. Parking shelter for scooters and motorcycles according to Claim 3, characterized in that said articulation guide (4) has a circular contour and a mechanical, magnetic or electronic lock (5) that may be actuated by remote control, to block the rotary motion of the sections (8) of the cap (7) around the guide (4).

8. Parking shelter for scooter and motorcycles according to Claim 3, characterized in that the rotation of the cap (7) is actuated by electric motor means.

9. Parking shelter for scooters and motorcycles according to Claim 1, characterized in that said covering means are made of rigid and waterproof materials.

10. Parking shelter for scooters and motorcycles according to Claim 1, characterized in that said shelter is provided with antitheft systems.

11. Parking shelter for scooters and motorcycles according to Claim 1, characterized in that a plurality of said shelters (1) is arranged in one or more rows and is fixed to the ground by a tubular frame or rack (30) through said mechanical support means or said articulation guide (4).
